# FASCICULE DE BREVET EUROPEEN

(11) **EP 3 489 931 B1**
(45) Date de publication et mention de la délivrance du brevet: **06.03.2024**
(21) Numéro de dépôt: 18208071.3
(22) Date de dépôt: 23.11.2018
(51) Int. Cl.: G08G 5/00, G01C 23/00, G06F 3/00

(54) **SYSTÈME DE CALCUL DE MISSION D'UN AÉRONEF COMPORTANT UNE PLATINE DE MISSION**
BERECHNUNGSSYSTEM DER MISSION EINES LUFTFAHRZEUGS, DAS EINE MISSIONS-PLATINE UMFASST
MISSION COMPUTING SYSTEM FOR AN AIRCRAFT INCLUDING A MISSION PLATE

(30) Priorité: 24.11.2017 FR 1701234
(43) Date de publication de la demande: 29.05.2019
(73) Titulaire: Dassault Aviation, 75008 Paris (FR)
(72) Inventeur: BRIAND, Benjamin, 92500 RUEIL MALMAISON (FR); CARLE, Cédric, 33510 ANDERNOS LES BAINS (FR); DRINAL, Stéphane, 75015 PARIS (FR); GRIMALD, Cyrille, 92100 BOULOGNE (FR); SAEZ, Jean-François, 78430 LOUVECIENNES (FR); SAINT REQUIER, Cyril, 78180 MONTIGNY LE BRETONNEUX (FR); VALLART, Jean-Baptiste, 13090 AIX-EN-PROVENCE (FR)
(74) Mandataire: Lavoix

(56) Documents cités:
- EP-A1- 2 608 187
- US-A1- 2008 071 434
- US-A1- 2008 294 335
- US-A1- 2009 234 519
- US-A1- 2012 245 768
- US-A1- 2016 078 770

## Description

La présente invention concerne un système de calcul de mission d'un aéronef selon le préambule de la revendication 1.

US2016078770 décrit un système du type précité

Un tel système de calcul est notamment destiné à être intégré dans un cockpit d'aéronef, en parallèle d'un système de conduite de vol (« Flight Management System » ou « FMS » en anglais), pour permettre à l'équipage de déterminer des trajectoires de mission.

En variante, le système de calcul est propre à être intégré dans un système de planification de mission non embarqué, par exemple dans une infrastructure aéroportuaire d'établissement de trajectoire d'aéronef, et/ou dans un bagage de vol électronique (« Electronic Flight Bag » ou « EFB »), éventuellement constitué d'un dispositif électronique portable.

La préparation et la définition d'une mission d'aéronef entre un premier point géographique et un deuxième point géographique est une tâche consommatrice en temps. Elle nécessite notamment de déterminer la route que va suivre l'aéronef, le profil de vol associé, et le chargement en passagers, en fret et en carburant. Cette définition est effectuée en fonction d'un contexte de mission incluant la météorologie, les routes aériennes à emprunter, et d'un contexte avion qui inclut la configuration et le type d'aéronef utilisé, ainsi que son état de fonctionnement.

Dans l'aviation civile classique, la mission est relativement définie, puisqu'elle consiste généralement à emmener des passagers d'un premier point géographique à un deuxième point géographique à un horaire donné en utilisant des routes de navigation commerciales connues et répétitives.

Généralement, les compagnies aériennes ou/et des fournisseurs externes disposent de systèmes de calcul permettant de fournir un plan de vol et des performances aéronef attendues, par exemple une quantité de carburant requise.

Même si des changements peuvent intervenir dans le plan de vol, ceux-ci sont généralement minimes et consistent souvent en un décalage de l'horaire pour tenir compte par exemple d'un changement de créneau ou de difficultés météorologiques.

Dans l'aviation d'affaires, les contraintes pesant sur l'équipage sont supérieures. Les clients demandent parfois à l'équipage de respecter des critères de mission plus stricts, par exemple en matière de confort du passager pendant le vol, de possibilité de se connecter à des systèmes de transmission par satellite, de charge disponible, etc.

De plus, les conditions de mission, notamment les horaires, sont très variables, et les étapes de la mission peuvent changer rapidement en fonction des besoins propres des passagers.

Dans ce cadre, les systèmes de fournitures de plans de vol existants ne donnent pas entière satisfaction.

En particulier, ces systèmes sont conçus pour fonctionner sur une somme de critères d'entrée (vitesse, niveau de vol, nombre de passagers,...) auquel correspondra une seule solution de navigation. Il est donc fréquemment nécessaire d'effectuer plusieurs itérations pour ajuster les hypothèses de mission. De plus, ces systèmes fonctionnent en suivant des routes aériennes déjà établies, qui résultent de la radionavigation.

Ces systèmes sont basés sur l'identification d'une route aérienne (trace sol, c'est-à-dire la trajectoire de l'avion en projection sur le sol), puis sur une optimisation verticale de la trajectoire tenant compte uniquement des performances de l'avion (héritage de la radionavigation). La route n'est donc pas elle-même optimisée en fonction du contexte mission (contrainte, critères, météo,...)

Dans l'aviation civile, du personnel au sol est souvent prévu pour alléger la charge de l'équipage et effectuer au moins partiellement le travail de préparation.

Par contre, dans l'aviation d'affaires, l'équipage doit souvent lui-même préparer la mission, en tenant compte des contraintes particulières des passagers, et des changements pouvant intervenir à tout moment dans la mission.

Un but de l'invention est donc de fournir un système de calcul de mission d'aéronef qui permette à l'équipage de pouvoir facilement évaluer la faisabilité de mission, avec une charge de travail réduite, en tenant compte des spécifications opérationnelles de mission particulières ou changeantes au cours de la mission.

À cet effet, l'invention a pour objet un système selon la revendication 1.

Le système selon l'invention peut comprendre l'une ou plusieurs des caractéristiques des revendications 2 à 14, prise(s) isolément ou suivant toute combinaison techniquement possible.

L'invention a également pour objet un procédé de calcul de mission d'un aéronef selon la revendication 15.

L'invention sera mieux comprise à la lecture de la description qui va suivre, donnée uniquement à titre d'exemple, et faite en se référant aux dessins annexés, sur lesquels :
- la figure 1 est un schéma synoptique illustrant un premier système de calcul de mission selon l'invention, intégré dans un cockpit d'un aéronef ;
- la figure 2 est une vue schématique d'une zone de navigation de l'aéronef dans laquelle se trouvent des régions de turbulences, des régions ne répondant pas aux critères de confort de mission et des régions de couverture de télécommunication par satellite ;
- la figure 3 est une vue schématique illustrant une fenêtre d'affichage d'une platine de mission du système selon l'invention, lors de la définition de spécifications opérationnelles de mission par l'équipage ;
- la figure 4 est une vue analogue à la figure 3, après modification d'un choix de spécifications opérationnelles ;
- la figure 5 est une vue analogue à la figure 3, dans lequel le système propose une route alternative ;
- la figure 6 est une vue analogue à la figure 3, dans laquelle l'utilisateur modifie un autre choix de spécification opérationnelle de mission ;
- la figure 7 est une vue analogue à la figure 6, illustrant un cadre de restitution présentant un indicateur de restitution de faisabilité de la mission ;
- la figure 8 est une vue d'une fenêtre de navigation illustrant la non faisabilité d'un tronçon particulier de la mission ;
- les figures 9 et 10 illustrent d'autres indicateurs particuliers de restitution de faisabilité de la mission, dans le cas d'une mission non réalisable, et dans un cas où le système propose une alternative pour réaliser la mission ;
- la figure 11 illustre la fenêtre affichée sur une variante de système de calcul selon l'invention ; et
- la figure 12 est une vue schématique illustrant un autre système de calcul de mission selon l'invention.

Les figures sont illustratives d'un affichage de cockpit d'aéronef. Elles sont donc présentées avec des indications en anglais qui est la langue courante dans ce domaine. Les indications nécessaires pour la compréhension de l'invention sont traduites dans la description qui suit.

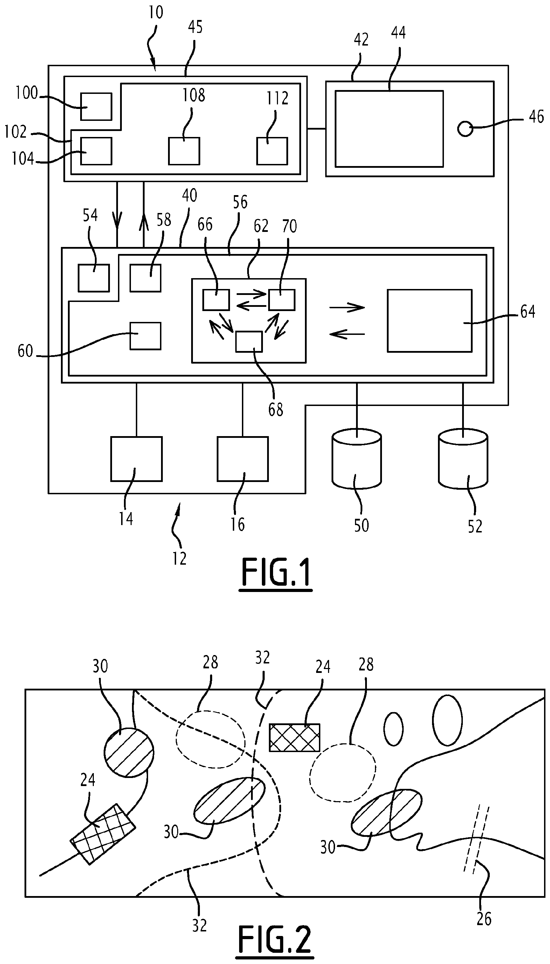

Un premier système 10 de calcul de mission selon l'invention, présent dans le cockpit 12 d'un aéronef est illustré par la figure 1.

L'aéronef est de préférence un aéronef civil, notamment un avion d'affaires.

D'une manière connue, le cockpit 12 de l'aéronef est destiné à commander l'ensemble des systèmes de l'aéronef lors de son utilisation.

Le cockpit 12 comporte notamment, outre le système 10 de calcul de mission, un système 14 de conduite de vol du cockpit de l'aéronef (« Flight Management System » en anglais ou « FMS »), et un système 16 de gestion et de suivi des différents systèmes avion.

Le système de conduite de vol 14 est destiné à assister le pilote de l'aéronef pour mener la navigation de l'aéronef lors d'une mission. Il est propre à fournir des informations notamment sur la route suivie par l'aéronef, et sur des paramètres d'évolution de l'aéronef tels que la consommation en carburant.

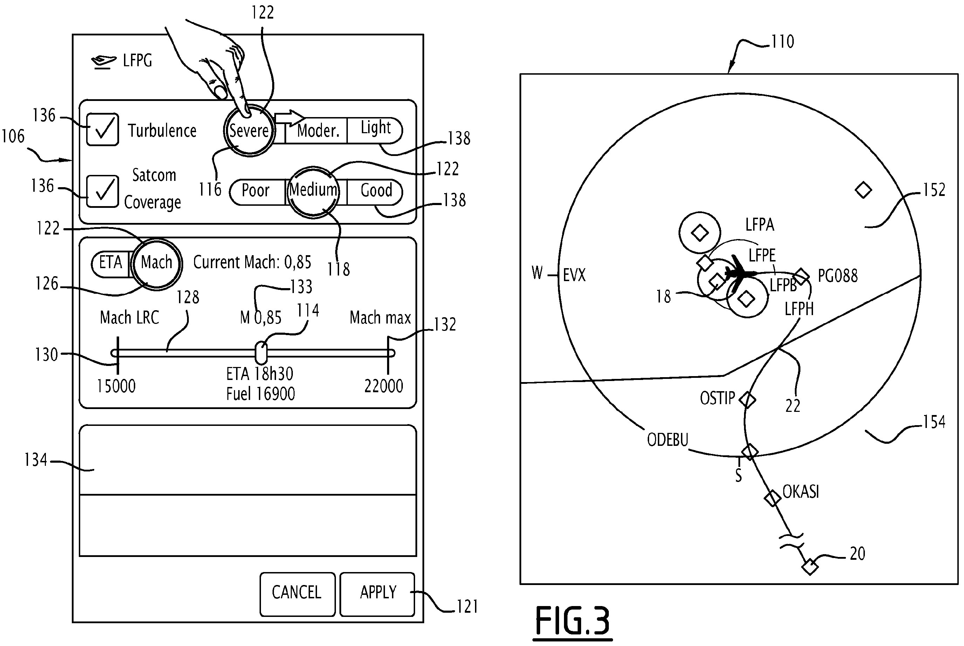

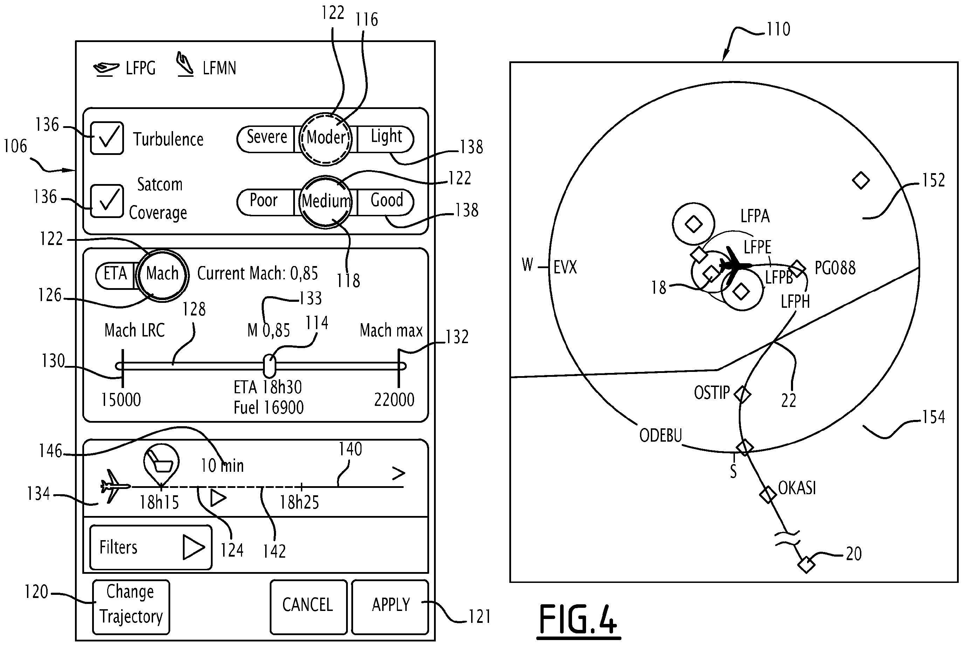

Il est également propre à guider l'aéronef pour lui faire suivre une trajectoire prédéterminée entre un premier point géographique 18 d'origine et un deuxième point géographique 20 de destination (représentés schématiquement sur les figures 3 et 4).

Le système 16 de gestion et de suivi des différents systèmes avion est notamment destiné à permettre à l'équipage de suivre et éventuellement de piloter l'ensemble des systèmes aéronef. Il est propre en particulier à déterminer un état de fonctionnement de l'aéronef, notamment la présence de défauts et de pannes présents sur l'aéronef au sol ou/et en vol.

Comme on le verra plus bas, le système de calcul de mission 10 selon l'invention est raccordé au système 16 pour prendre en compte l'état de l'avion dans les calculs de mission.

La mission effectuée par l'aéronef comporte au moins une étape 22 (ou « leg ») entre un premier point géographique 18 d'origine et un deuxième point géographique 20 de destination (voir figure 3). Dans certains cas, la mission effectuée par l'aéronef comporte une pluralité d'étapes 22 successives, le deuxième point géographique 20 de destination d'une première étape constituant le premier point géographique 18 d'origine d'une deuxième étape.

La mission est effectuée en suivant des spécifications opérationnelles qui comprennent notamment un contexte de mission et un contexte avion.

Le contexte de mission comporte par exemple au moins une contrainte d'opération, notamment un nombre de passagers à transporter, un poids maximum au décollage lié notamment à une longueur de piste disponible, une charge en carburant de navigation, une charge en carburant de réserve, un horaire de départ ou/et un horaire d'arrivée imposés, une distance maximale à parcourir, et/ou une distance à un terrain alternatif en route.

En référence à la figure 2, le contexte de mission comprend avantageusement des contraintes de navigation, comme par exemple des zones 24 ou des niveaux de vol interdits, des routes 26 aériennes ou des niveaux de vol imposés, ou plus globalement des zones de vol libre ou/et des zones de vol imposé par les voies aériennes.

Le contexte de mission comprend avantageusement des contraintes météorologiques telles que des zones 28 de formation de gel ou d'évitement météorologique (cumulonimbus par exemple).

Le contexte de mission comprend éventuellement aussi des contraintes de confort passager, notamment des zones 30 de turbulences à éviter, en particulier en fonction d'un niveau de turbulences souhaité, choisi par exemple parmi un niveau faible, un niveau moyen, et un niveau fort de turbulences, ou des zones 32 de couverture de télécommunication par satellite pour permettre une télécommunication entre l'aéronef et le monde extérieur notamment au sol, en particulier choisi parmi un niveau faible, un niveau moyen et un bon niveau de possibilité de communication.

Le contexte avion peut comprendre des contraintes d'utilisation liées à des autorisations à partir (ou « dispatch ») ou/et des contraintes liées à un état particulier de l'aéronef en termes de défauts et/ou de pannes sur un ou plusieurs équipements de l'aéronef.

Par exemple, une autorisation à partir liée à certains défauts de l'aéronef peut imposer un niveau de vol maximal et/ou une vitesse maximale. Un défaut de rentrée du train d'atterrissage ou d'un volet peut également imposer une contrainte de consommation en carburant augmentée.

Le système de calcul de mission 10 est destiné à établir une trajectoire de l'aéronef pour effectuer l'étape 22 entre au moins un premier point géographique 18 d'origine et au moins un deuxième point géographique 20 de destination, en tenant compte des spécifications opérationnelles, et notamment du contexte de mission et du contexte avion.

La trajectoire obtenue par l'intermédiaire du système de calcul de mission 10 inclut la route de l'aéronef en latitude et en longitude, ainsi que le profil de vol en altitude.

Avantageusement, le système de calcul de mission 10 est en outre propre à établir des paramètres de plan de vol, notamment le poids et l'équilibre de l'aéronef, le carton de décollage et d'atterrissage (c'est-à-dire les données de vol pour le pilote relative au guidage telles que les vitesses V1, V2, VR sur la piste, l'accélération au lâcher des freins, le régime moteur au décollage, et/ou l'assiette au décollage) ainsi que le calcul des masses limites au décollage et à l'atterrissage, la météorologie à basse vitesse (c'est-à-dire en surface) et à grande vitesse (c'est-à-dire en route), les informations de contrôle aérien (service de diffusion ATIS pour « Automated Terminal Information Service », e-NOTAM pour « Notice to airmen » , fréquence de télécommunications, FIRS pour « Flight Information Régions », centre de contrôle aérien), et/ou les terrains alternatifs disponibles à destination, et en cours de route.

En référence à la figure 1, le système de calcul de mission 10 comporte un moteur de calcul 40 et une interface utilisateur 42 de paramétrage et de restitution formant une platine de mission.

L'interface utilisateur 42 comporte par exemple au moins un afficheur 44, un ensemble 45 de génération d'affichage sur l'afficheur 44 et au moins un organe 46 de sélection et de saisie d'information par l'utilisateur, qui peut être un clavier réel ou virtuel, une souris et/ou un système tactile.

L'interface utilisateur 42 est propre à autoriser l'utilisateur à saisir au moins une partie des spécifications opérationnelles, notamment les points géographiques 18, 20 d'origine et de destination, des points de passage, des horaires souhaités, des charges souhaitées, un vent maximum sur la trajectoire, etc.

L'interface utilisateur 42 est propre avantageusement à permettre à l'utilisateur de définir au moins une partie du contexte de mission, en particulier les contraintes de navigation et de confort passager, et/ou de définir au moins une partie du contexte avion.

Le moteur de calcul 40 est connecté à l'interface 42. Il est avantageusement raccordé également au système de conduite de vol 14, au système de gestion et de suivi 16.

Il est propre à interroger une base de données 50 météorologique et/ou une base de données 52 d'information de navigation, par exemple par l'intermédiaire d'un réseau de données, notamment un réseau de données sans fil.

La base de données météorologique 50 contient des données météorologiques actuelles et prédictives dans la zone de navigation de l'aéronef entre le point d'origine 18 et le point de destination 20.

Ces données météorologiques sont fournies à plusieurs niveaux de vol d'altitudes, par exemple tous les 304 m (1000 pieds), à une altitude comprise par exemple entre 0 m et 15545 m (51000 pieds).

Les données météorologiques sont fournies en altitude mais aussi « autour du plan de vol » pour fournir un composant météorologique évolutif dans le temps.

Ces données météorologiques incluent notamment la vitesse et la direction du vent, la température, la pression, les précipitations, les phénomènes dangereux (gel, orages / cumulonimbus), la turbulence, le niveau de la tropopause, les nuages de cendre volcanique, les nuages de poussière / sable, la visibilité, ainsi que les observations aéronautiques sur zone ou en route (METAR, TAF, PIREPS)... Elles comportent éventuellement la définition et l'évolution dans le temps et dans l'espace des coordonnées géographiques de zones 28 de formation de gel ou d'évitement météorologique et/ou de zones de turbulences 30.

La base de données d'information de navigation 52 contient des données d'information sur les terrains au point d'origine 18 et au point de destination 20, et entre ces points 18, 20. La base de données d'information de navigation 52 comporte avantageusement une sous-base de données de navigation (points de passage (ou « waypoints » en anglais, routes, etc.) et une sous-base de données aéroports (longueurs de piste, orientation des pistes, pentes, etc.)

Elle contient avantageusement la définition des coordonnées géographiques de zones ou/et de niveaux de vol interdits 24, notamment en raison de données géopolitiques, et/ou de routes 26 aériennes imposées.

Elle comporte éventuellement la définition de zones 32 de couverture de télécommunications par satellite.

Le moteur de calcul 40 comporte au moins un calculateur comprenant au moins un processeur 54 et une mémoire 56. La mémoire 56 contient des modules logiciels propres à être exécutés par le processeur 54.

En particulier, la mémoire 56 contient un module logiciel 58 d'initialisation de spécifications de mission, propre à acquérir des spécifications opérationnelles de la mission à partir notamment de l'interface 42, et un module logiciel 60 de récupération de données météorologiques à partir de la base de données 50.

La mémoire 56 contient en outre un module logiciel 62 de détermination de performances avion, en fonction des spécifications de mission et des données météorologiques, et un module logiciel 64 de calcul d'une trajectoire avion, en fonction des performances avion déterminées, des données météorologiques et des spécifications de mission.

Le module d'initialisation 58 est propre à acquérir les spécifications opérationnelles de la mission à partir de l'interface 42, et/ou avantageusement à partir du système de conduite de vol 14, et/ou du système de gestion et de suivi 16.

Le module de récupération 60 est propre à interroger la base de données météorologique 50 pour obtenir notamment les vitesses et les directions du vent entre le point d'origine 18 et le point de destination 20, à plusieurs niveaux de vol.

Le module de détermination 62 comporte une application 66 logicielle de détermination du poids et de l'équilibre de l'aéronef, destinée à déterminer le centre de gravité de l'aéronef, une application logicielle 68 de détermination de performances haute vitesse, et avantageusement une application logicielle 70 de détermination de performances basse vitesse.

L'application 66 de détermination du poids et de l'équilibre de l'aéronef est propre à déterminer la position du centre de gravité de l'aéronef en l'absence de carburant dans l'aéronef (ou « Zero Fuel Weight Center of Gravity ») et la masse de l'aéronef en l'absence de carburant dans l'aéronef (ou « Zero Fuel Weight»), en fonction de la masse à vide de l'aéronef, des équipements embarqués dans l'aéronef, des passagers et/ou du fret embarqué, et de leur position dans l'aéronef, ainsi qu'une surveillance du domaine de vol de l'avion (diagramme masse - centrage)

L'application de détermination de performances haute vitesse 68 est propre à déterminer la masse de carburant à embarquer dans l'aéronef sur une trajectoire donnée, par exemple une trajectoire orthodromique entre le point d'origine 18 et le point de destination 20, en utilisant la position du centre de gravité et la masse de l'aéronef en l'absence de carburant dans l'aéronef (ou « Zero Fuel Weight») déterminées par l'application 66, une vitesse air prédéterminée, par exemple saisie ou calculée à partir des données saisies par l'interface utilisateur 42, des données météorologiques récupérées à partir du module 60, notamment des vitesses de vent et des températures et éventuellement du contexte avion, par exemple le type et l'âge des moteurs, récupéré à partir du module d'initialisation 58..

L'application de détermination de performances basse vitesse 70 est propre à déterminer notamment la masse maximale de l'aéronef (et du carton de décollage) permettant à l'aéronef de décoller et/ou d'atterrir sur un terrain, en fonction de données de longueurs de pistes récupérées à partir de la base de données 52, et de données météorologiques récupérées à partir du module 60.

Le module de calcul 64 est propre à calculer au moins une trajectoire 22 entre le point d'origine 18 et le point de destination 20.

Dans un mode de réalisation, le module de calcul 64 est configuré pour calculer au moins une courbe d'iso-déplacement de l'aéronef, notamment au moins une courbe isochrone ou/et au moins une courbe d'iso-consommation de carburant, à partir d'au moins un point de la trajectoire et à déterminer la position d'au moins un autre point de la trajectoire sur la courbe d'iso-déplacement de l'aéronef.

Un tel mode de fonctionnement est décrit dans la demande de brevet intitulée « Système de calcul de mission d'un aéronef, comportant un moteur de calcul de trajectoire de l'aéronef lors de la mission et procédé associé » déposée conjointement par la Demanderesse.

En variante, le module de calcul 64 est un module de calcul commercial fourni par un fournisseur de services tel que ARINC DIRECT ou MyGDC ou/et un module de calcul spécifique à une unité de planification de vol à terre dans une infrastructure aéroportuaire d'établissement de trajectoires d'aéronef.

En variante, lors d'une exécution de mission, le module de calcul 64 est un module de calcul de trajectoire intégré au système 14 de conduite de vol du cockpit de l'aéronef.

Dans l'exemple représenté sur la figure 1, l'afficheur 44 est par exemple un écran présent dans le cockpit de l'aéronef, notamment un écran présent en face d'au moins un des sièges du cockpit de l'aéronef.

L'ensemble de génération d'affichage 45 comporte au moins un processeur 100 et une mémoire 102 contenant au moins un module logiciel propre à être exécuté par le processeur pour engendrer un affichage sur l'afficheur 44.

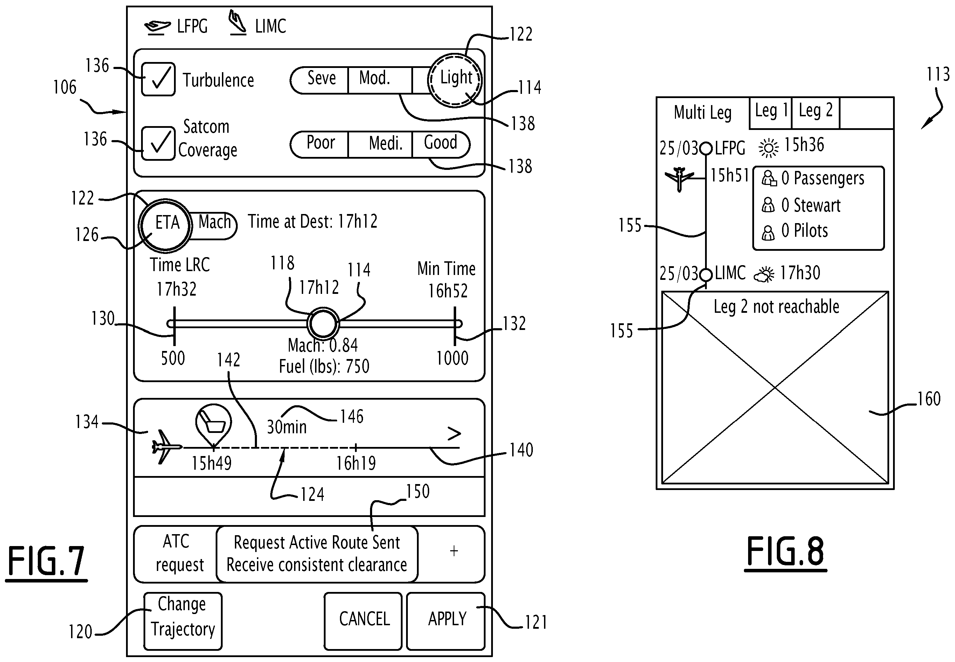

Dans l'exemple représenté sur la figure 1, la mémoire 102 contient au moins un module logiciel 104 d'affichage d'une fenêtre 106 de définition de spécifications opérationnelles et de restitution d'information de faisabilité de la mission (voir figure 3). La mémoire 102 contient avantageusement un module logiciel 108 d'affichage d'une fenêtre 110 de trajectoire (voir figure 3), et éventuellement, un module 112 d'affichage d'une fenêtre 113 récapitulative de points de trajectoire successifs, dont un exemple est illustré sur la figure 8.

L'ensemble de génération d'affichage 45 est ainsi configuré pour afficher la fenêtre de définition et de restitution 106 sur l'afficheur 44.

Dans l'exemple illustré par la figure 3, la fenêtre 106 comporte des boutons 114, 116, 118 de définition de choix de spécifications opérationnelles de la mission.

En référence à la figure 7, la fenêtre 106 comporte en outre avantageusement un bouton d'activation 120 du moteur de calcul 40 pour déterminer au moins une trajectoire alternative possible de l'aéronef en fonction des choix de spécifications opérationnelles définies à l'aide des boutons 114, 116, 118.

La fenêtre 106 comporte en outre éventuellement un bouton 121 de mise en application d'une trajectoire.

La fenêtre 106 comporte en outre des indicateurs de restitution 122, 124 (l'indicateur 124 étant visible sur la figure 7), donnant au moins une information de faisabilité de la mission en respectant les choix de spécifications opérationnelles définis à l'aide des boutons 114, 116, 118.

Parmi les boutons de définition 114, 116, 118, un premier bouton de définition 114 est destiné à être actionné par un utilisateur pour définir un choix d'une contrainte de navigation parmi une vitesse air souhaitée (ici définie par un nombre de Mach) ou une heure d'arrivée souhaitée RTA.

La fenêtre 106 comporte à cet effet un bouton 126 de sélection de la contrainte de navigation souhaitée parmi la vitesse air souhaitée et l'heure d'arrivée souhaitée.

Le bouton 126 de sélection est propre à être déplacé par l'utilisateur pour choisir le type de contrainte de navigation définie par le premier bouton 114.

Le premier bouton 114 est placé mobile sur une échelle de choix de contrainte 128, permettant à l'utilisateur de définir un choix de valeur de contrainte entre une valeur minimale, prise à une première extrémité 130 de l'échelle 128, et une valeur maximale, prise à une deuxième extrémité 132 de l'échelle 128, en fonction de la position du premier bouton 114 sur l'échelle de choix de contrainte 128.

Dans cet exemple, l'échelle de choix de contrainte 128 s'étend horizontalement.

Des indicateurs 133 affichent simultanément, au voisinage du bouton 114, la valeur de contrainte choisie, ici la vitesse air sélectionnée et/ou l'heure d'arrivée sélectionnée dans la position courante du bouton 114, et éventuellement d'autres informations telles que la masse de carburant nécessaire pour réaliser cette contrainte.

Le deuxième bouton 116 et/ou le troisième bouton 118 sont ici propres à être actionnés par l'utilisateur pour sélectionner des choix de contraintes de confort passager.

La fenêtre 106 comporte avantageusement, pour chaque bouton 116, 118, une case 136 d'activation de la définition du choix de contrainte.

Elle comporte, pour chaque bouton 116, 118, une échelle de choix de contrainte 138, permettant de définir des choix discrets de contraintes parmi un ensemble de contraintes possibles, en déplaçant le bouton 116, 118 sur l'échelle de choix de contraintes 138.

Dans cet exemple, les échelles de choix de contraintes 138 s'étendent horizontalement.

Par exemple, le bouton 116 est destiné à définir un choix de contraintes de turbulences entre une contrainte sévère (« Severe »), une contrainte modérée (« Moder ») et une contrainte légère (« Light »).

Le bouton 118 est destiné à définir un choix de contraintes de couverture satellite entre une contrainte de faible couverture (« Poor »), une contrainte de moyenne couverture (« Medium »), et une contrainte de bonne couverture (« Good »).

La case d'activation 136 est propre à être sélectionnée par l'utilisateur pour la passer d'une configuration d'application de la spécification opérationnelle à une configuration de non application de la spécification opérationnelle.

Après chaque modification de la position d'un bouton 114 à 118, ou d'une case d'activation 136, le moteur de calcul 40 est propre à activer le module d'initialisation 58 pour acquérir les choix de spécifications opérationnelles définis par les positions respectives des boutons 114 à 118 et/ou par chaque case d'activation 136. Puis, le moteur de calcul 40 est propre à activer le module de récupération 60, le module de détermination 62 et le module de calcul 64 pour déterminer au moins une trajectoire respectant les choix de spécifications opérationnelles définis.

Le moteur de calcul 40 est propre à être paramétré par l'utilisateur afin de définir par zones les paramètres de calcul de la trajectoire entre une proposition de trajectoire permettant de modifier la trajectoire verticale, avec ou sans modification latérale. Les modifications latérales peuvent être autorisées via les actions suivantes : vol libre (« free flight »), vol direct vers un point de passage avec possibilité de modification latérale (« direct to » + « offset lateral ») ou respect des routes aériennes.

Si aucune trajectoire respectant les choix de spécifications opérationnelles définis n'est obtenue, le moteur de calcul 40 est propre à être activé par le bouton 121 pour modifier au moins un choix de spécification opérationnelle, puis pour activer à nouveau le module de récupération 60, le module de détermination 62, et le module de calcul 64 afin de déterminer au moins une trajectoire alternative dans laquelle au moins un choix de spécification opérationnelle définie n'est pas respecté.

Le moteur de calcul 40 est propre à être paramétré par l'utilisateur afin de définir par zones les paramètres de calcul de la trajectoire alternative entre une proposition de trajectoire identique, une proposition permettant de modifier la trajectoire verticale, avec ou sans modification latérale. Les modifications latérales peuvent être autorisées via les actions suivantes : vol libre (« free flight »), vol direct vers un point de passage avec possibilité de modification latérale (« direct to » + « offset lateral ») ou respect des routes aériennes.

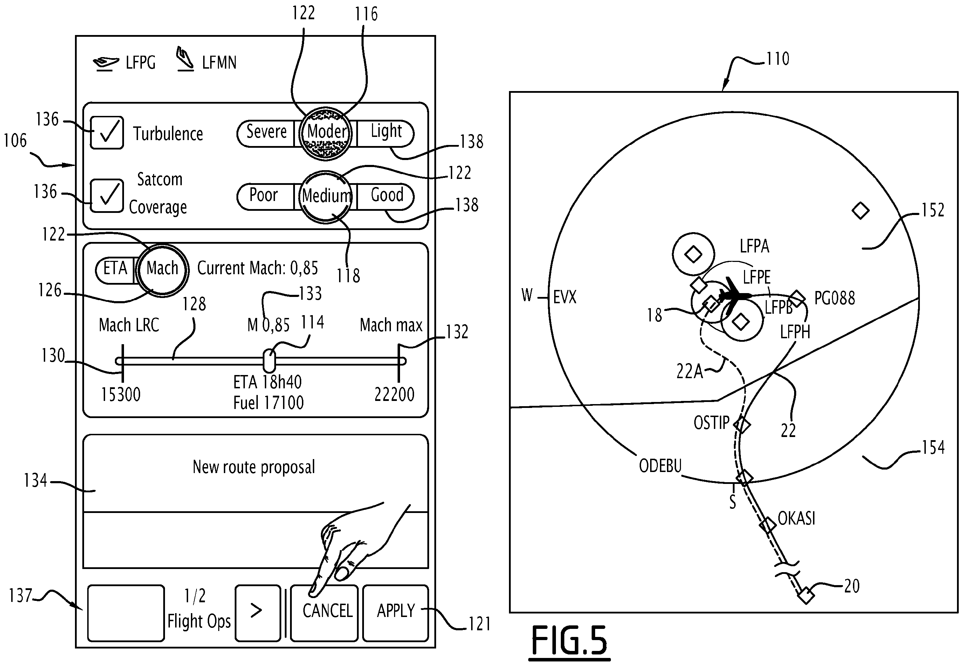

Plusieurs trajectoires alternatives peuvent être proposées par le moteur de calcul 40. Dans ce cas, l'ensemble de gestion d'affichage 45 est propre à afficher sur la fenêtre de définition et de restitution 106 une barre de défilement 137 (voir figure 5) permettant à l'utilisateur d'afficher successivement les différentes propositions de trajectoire, et les indicateurs de restitution 122, 124 associés à chacune des propositions.

En référence au figures 3 à 5, un premier indicateur de restitution 122 est présent sur chaque bouton de définition 114, 116, 118 ou/et sur un bouton de sélection 126.

Le premier indicateur de restitution 122 est un indicateur spécifique à la spécification opérationnelle qui peut être définie par chaque bouton 114, 116, 118. Il donne une information de la faisabilité de la mission en indiquant si le choix actuel de la spécification opérationnelle définie par le bouton 114, 116, 118 respectif peut être respecté.

Par exemple, l'indicateur de restitution 122 est propre à basculer entre une première configuration d'affichage, dans laquelle il indique la faisabilité de la mission en respectant le choix de la spécification opérationnelle et une deuxième configuration d'affichage, dans laquelle il indique la non faisabilité de la mission en respectant le choix de la spécification opérationnelle. Il présente éventuellement une troisième configuration d'affichage correspondant à une proposition de choix alternatif de spécification opérationnelle pouvant conduire à une faisabilité de la mission.

Dans l'exemple représenté sur les figures 3 à 7, l'indicateur de restitution 122 est mis en oeuvre par un changement de couleur du bouton 116, 118, 126 respectif, la première configuration étant marquée par une première couleur (symbolisée par un trait gras sur les figures), par exemple une couleur verte, la deuxième configuration étant marquée par une deuxième couleur (symbolisée par un pointillé sur les figures), par exemple une couleur ambre, et la troisième configuration par une troisième couleur (symbolisée par un grisé sur les figures), par exemple une couleur bleue.

Un deuxième indicateur de restitution 124 est affiché dans un cadre 134 de restitution d'un profil de mission.

Dans un premier exemple, le profil de mission est symbolisé par une ligne 140 de déroulement de la mission, illustrant par exemple le déroulé temporel ou spatial d'au moins une étape de la mission.

L'indicateur de restitution 124 est par exemple un indicateur de restitution globale qui modifie la configuration de la ligne 140 dans son ensemble, entre la première configuration dans laquelle il indique la faisabilité de la mission en respectant l'ensemble des choix de spécifications opérationnelles de la mission, et la deuxième configuration dans laquelle il indique la non faisabilité de la mission en respectant l'ensemble des choix de spécifications opérationnelles de la mission.

Dans l'exemple visible sur la figure 2, dans la deuxième configuration, l'indicateur de restitution 124 est propre à identifier sur la ligne de déroulement de la mission 140, le ou chaque segment 142 de la mission dans lequel le choix de la de chaque spécification opérationnelle de mission est impossible à respecter.

Par exemple, dans la première configuration, la ligne de déroulement de la mission 140 est colorée dans une première couleur, notamment en vert.

Dans la deuxième configuration, la ligne de déroulement de la mission 140 ou/et chaque segment 142 est coloré dans une deuxième couleur, notamment en ambre ou en rouge (représentation en pointillés sur la figure 4).

Le bouton d'activation 120 est propre à être affiché sur la fenêtre 106 lorsqu'au moins un indicateur de restitution 122, 124 est dans sa deuxième configuration dans laquelle il indique la non faisabilité de la mission.

Le bouton d'activation 120 est propre à être activé par l'utilisateur pour lancer le moteur de calcul 40 afin d'obtenir une trajectoire alternative dans laquelle au moins un choix de spécification opérationnelle n'est pas respecté.

Le bouton de mise en application d'une trajectoire 121 est propre à être activé par l'utilisateur pour transmettre la trajectoire obtenue et/ou des paramètres de plan de vol au système de conduite de vol 14.

Après activation du bouton de mise en activation d'une trajectoire 121, l'ensemble de génération d'affichage est en outre propre à afficher une interface 150 de transmission de données de route au contrôle aérien, visible sur la figure 7.

L'ensemble de gestion d'affichage 45 est propre à afficher la fenêtre de trajectoire 110 sur l'afficheur 44 simultanément avec la fenêtre de définition et de restitution 106.

La fenêtre de trajectoire 110 est propre à illustrer en deux dimensions, dans un plan horizontal, une projection de la trajectoire en cours définie par le moteur de calcul 40 sur le plan horizontal. Elle est propre à indiquer les zones de vol libre 152 et les zones de vol contraint 154, notamment dans des routes aériennes imposées 26.

Elle est également propre à afficher au moins une trajectoire alternative déterminée par le moteur de calcul 40 (non représentée), dans le cas où aucune trajectoire ne respecte les choix de spécifications opérationnelles.

L'ensemble de gestion d'affichage 45 est propre à afficher la fenêtre récapitulative 110 sur l'afficheur 44 simultanément avec la fenêtre de définition et de restitution 106.

En référence à la figure 8, la fenêtre récapitulative 113 comporte des lignes 155 illustrant les étapes successives de la mission et éventuellement des spécifications opérationnelles associées à chaque étape, notamment des contraintes d'opération.

Un procédé de calcul d'une mission, mis en oeuvre à l'aide du système 10 selon l'invention, va maintenant être décrit.

Ce procédé est mis en oeuvre par exemple lors de la préparation de la mission, pour établir sa faisabilité, pour préparer de manière plus précise la mission afin d'obtenir un plan de vol, ou pour tenir compte d'un changement de dernière minute dans une mission déjà préparée.

En variante, ce procédé est mis en oeuvre lors du suivi de la mission, ou pour tester des hypothèses de modification de la mission, pour l'optimiser, ou pour la reconfigurer.

Initialement, l'utilisateur, notamment l'équipage, saisit au moins une partie des spécifications opérationnelles à l'aide de l'interface de paramétrage 42. L'utilisateur définit par exemple pour chaque étape de la mission, le point géographique d'origine 18, le point géographique de destination 20 et éventuellement, un nombre de passagers à transporter.

Puis, en référence à la figure 3, l'ensemble de génération d'affichage 45 affiche sur l'afficheur 44 la fenêtre de définition et de restitution 106.

L'utilisateur choisit tout d'abord une contrainte d'opération entre la vitesse air et l'heure d'arrivée à l'aide du bouton de sélection 126.

Puis, il actionne le premier bouton de définition 114 sur l'échelle 128 pour choisir le choix de spécification opérationnelle correspondant, ici une valeur de la contrainte d'opération. Dans l'exemple illustré par la figure 3, la contrainte d'opération est la vitesse air, et l'utilisateur choisit un nombre de Mach associé, en se référant à l'indicateur 133 de valeur.

Ceci étant fait, l'utilisateur sélectionne l'une et/ou l'autre des cases d'activation 136, pour définir des spécifications opérationnelles correspondant à des critères de confort passager.

Cette activation engendre l'activation du moteur de calcul 40. Le module d'initialisation 58 récupère les choix actuels de spécifications opérationnelles définis sur la fenêtre 106.

Le module d'initialisation 58 récupère avantageusement d'autres spécifications opérationnelles à partir du système de gestion et de suivi 16 de l'aéronef.

Cette étape initialise les spécifications opérationnelles liées au contexte de mission et au contexte avion, par exemple la présence de pannes ou d'autorisations à partir. Cette étape initialise également les spécifications opérationnelles de confort passager, notamment en termes de connectivité et de niveau de turbulences.

Puis, le module 60 de récupération de données météorologiques interroge la base de données météorologique 50 pour obtenir notamment les vitesses et les directions du vent entre le point d'origine 18 et le point de destination 20, à plusieurs niveaux de vol.

Le module de détermination de performances avion 62 est alors activé. L'application 66 de détermination du poids et de l'équilibre détermine la masse de l'aéronef et la position du centre de gravité de l'aéronef en l'absence de carburant dans l'aéronef (« Zero Fuel Weight » et « Zero Fuel Weight Center of Gravity »), en fonction de la masse à vide de l'aéronef, des équipements embarqués dans l'aéronef, des passagers et/ou du fret embarqué, et de leur position dans l'aéronef

Sur cette base, sur la base des données météorologiques récupérées par le module de récupération 60, sur la base du contexte avion récupéré à partir du module d'initialisation 58, et sur la base de la vitesse air souhaitée, le module de calcul 64 détermine une trajectoire possible incluant la route suivie, le poids et l'équilibre de l'aéronef, le carton de décollage et atterrissage,.

L'ensemble de génération d'affichage affiche alors sur la fenêtre de trajectoire 110 la projection de la trajectoire. Il affiche en outre sur la fenêtre récapitulative 113 des informations sur les différents points successifs de la trajectoire, pour les différentes étapes de la trajectoire.

Par ailleurs, l'ensemble de génération d'affichage 45 affiche, sur la fenêtre de définition et de restitution 106, les indicateurs 122, 124 de restitution.

Dans un premier cas, la trajectoire respecte les choix de spécifications opérationnelles définis, à savoir une turbulence sévère, une couverture satellite moyenne, et la vitesse air sélectionnée. Chaque indicateur 122, 124 est affiché dans sa première configuration d'affichage par exemple en affichant les boutons 116, 118, 126 dans la première couleur correspondant à cette configuration, par exemple une couleur verte.

Si l'utilisateur souhaite modifier une spécification opérationnelle de mission, par exemple une contrainte de confort passager, l'utilisateur actionne un bouton 116, 118 pour le déplacer sur l'échelle 138 et sélectionner un autre choix de spécification opérationnelle.

Dans l'exemple illustré sur les figures 3 à 4, l'utilisateur passe d'un choix de turbulences sévères à un choix de turbulences modérées en actionnant le bouton 116.

Après actionnement du bouton 116, le moteur de calcul 40 se réactive pour déterminer une nouvelle trajectoire respectant les nouveaux choix de spécifications opérationnelles.

Dans cet exemple, aucune trajectoire ne respecte tous les choix de spécifications opérationnelles. En particulier, le choix de spécification opérationnelle de turbulences ne peut pas être respecté.

Comme illustré par la figure 4, l'indicateur de restitution 122 associé au bouton 116 passe donc dans sa deuxième configuration d'affichage. Dans cet exemple, la couleur du bouton se modifie pour passer de la première couleur à la deuxième couleur.

De même, l'indicateur de restitution 124 affiche une ligne 140 de déroulement de mission présentant au moins un segment 142 affiché dans la deuxième configuration d'affichage, par exemple dans une couleur ambre. Un indicateur 146 de durée de non-respect des spécifications opérationnelles est éventuellement affiché pour signaler la durée de non respect, et éventuellement le temps de début de non respect, et le temps de fin de non respect.

Le bouton d'activation 120 s'affiche alors pour proposer à l'utilisateur d'effectuer un changement de trajectoire et obtenir une trajectoire alternative.

L'utilisateur active alors le bouton 120. Le moteur de calcul 40 définit une trajectoire alternative dans laquelle au moins un choix de spécifications opérationnelles n'est pas respecté. Dans l'exemple illustré par la figure 5, l'heure d'arrivée est modifiée, comme illustré sur le bouton 114. Le paramètre modifié s'affiche dans la troisième configuration. L'indicateur de restitution 122 correspondant au bouton 116 s'affiche aussi dans la troisième configuration.

La trajectoire alternative 22A s'affiche dans la troisième configuration (en pointillés sur la figure 5) sur la fenêtre 110.

De même, la barre 137 de défilement s'affiche, si plusieurs propositions de trajectoires alternatives sont possibles.

Éventuellement, si une trajectoire lui convient, l'utilisateur presse le bouton de mise en application 121 pour mettre en oeuvre la trajectoire et transmettre les informations au système de conduite de vol 14.

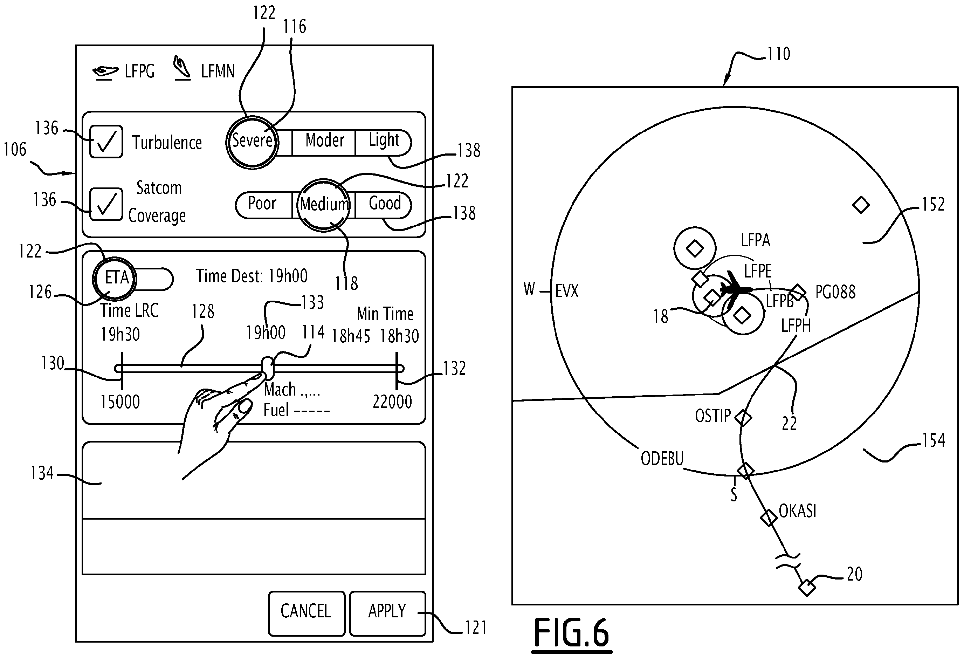

En variante, l'utilisateur peut annuler le choix de trajectoire. Il peut revenir dans la configuration de la figure 6, et sélectionner d'autres choix de spécifications opérationnelles, par exemple un changement d'heure d'arrivée, permettant d'obtenir une trajectoire respectant ces choix.

Après sélection de la trajectoire, en référence à la figure 7, la fenêtre 150 de transmission d'information au contrôle aérien s'affiche, permettant à l'utilisateur, en cours de mission, de transmettre de nouvelles informations au contrôle aérien.

Dans le cas où le système de calcul 10 est utilisé lors d'un vol comprenant plusieurs étapes d'une même mission, une panne d'un système de l'aéronef peut conduire à ce qu'une étape de la mission devienne non faisable compte tenu des spécifications opérationnelles définies pour cette étape. Dans ce cas, comme illustré sur la figure 8, un indicateur de restitution 160 s'affiche sur la fenêtre récapitulative 113 pour illustrer la non faisabilité de la deuxième étape de la mission. Dans cet exemple, l'indicateur de restitution 160 est un masque couvrant la représentation de la deuxième étape de la mission et indiquant qu'elle n'est pas faisable.

De plus, un indicateur global de non faisabilité de mission est susceptible de s'afficher sous forme d'un voyant coloré.

L'utilisateur peut choisir alors de se dérouter vers un terrain alternatif, permettant à nouveau de réaliser la mission en respectant les spécifications opérationnelles choisies, et les spécifications opérationnelles imposées par la panne.

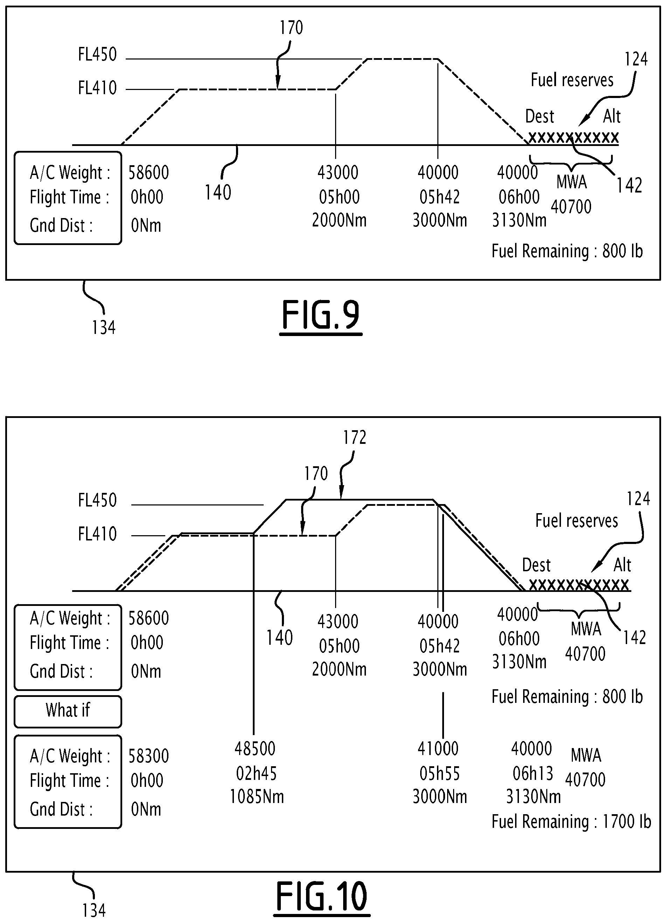

Dans une variante illustrée par la figure 9 et par la figure 10, l'ensemble de gestion d'affichage 45 est propre à afficher un cadre de restitution 134 comportant un profil 170 vertical de trajectoire de mission, situé au-dessus de la ligne 140 de déroulé de mission. L'indicateur 124 de restitution est formé par au moins un segment 142 de la ligne 140 ou du profil 170 dans lequel une spécification opérationnelle de mission, ici une distance maximale n'est pas respectée.

Sur la figure 10, une trajectoire alternative est proposée et le profil vertical alternatif 172 est affiché en superposition du profil vertical 170 de la trajectoire initiale pour illustrer les modifications de la trajectoire.

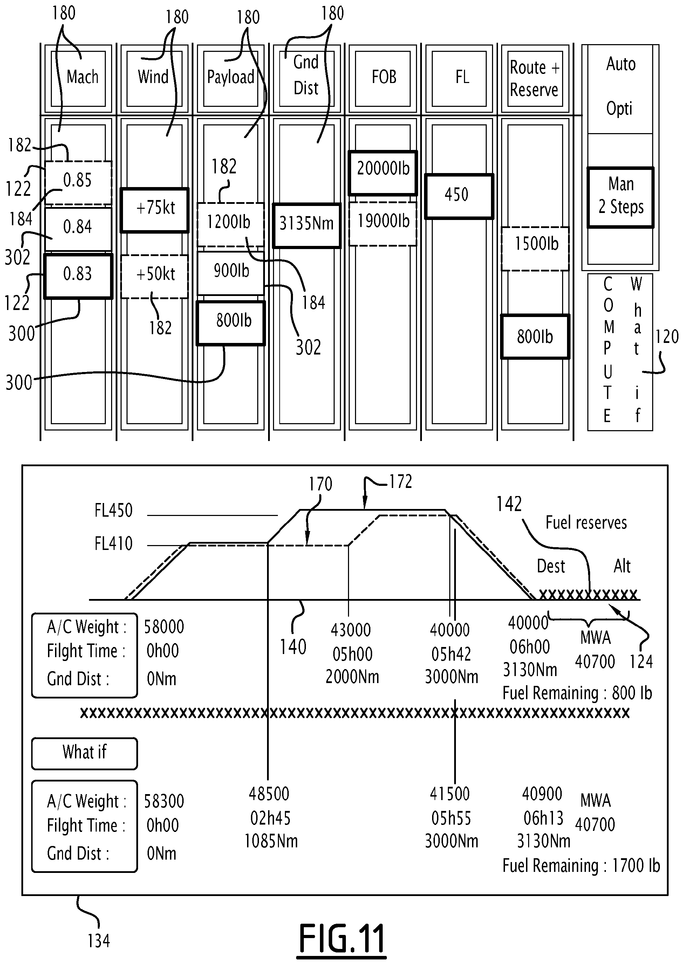

Une variante de fenêtre de définition et de restitution 106 est illustrée par la figure 11. Cette fenêtre 106 est notamment destinée à être utilisée pour la préparation de mission.

Comme illustré sur la figure 11, l'ensemble de génération d'affichage 45 est propre à afficher une pluralité de jauges 180 correspondant chacune à une spécification opérationnelle de mission pour lequel un choix de spécification opérationnelle doit être fait.

Chaque jauge 180 est munie d'un bouton de définition 182 sur lequel est indiqué une valeur 184 de choix de spécification opérationnelle. Un indicateur de restitution 122 est associé à chaque bouton de définition 182, par exemple sous forme d'un contour coloré du bouton de définition.

Dans cet exemple, les jauges 180 correspondent par exemple à une vitesse air (définie par un « Mach »), à une vitesse de vent (« Wind »), à une charge de l'aéronef (« Payload »), à une distance maximale à parcourir (« Gnd Dist »), à une charge en carburant (« FOB »), un niveau de vol (« FL »), et à une charge en carburant de réserve (« Route + reserve »).

Un bouton d'activation 120 du moteur de calcul est disposé au voisinage des jauges 180. Un cadre de restitution 134 est affiché sous les jauges 180.

Pour préparer la mission, l'utilisateur actionne les différents boutons de définition 182 des jauges 180 pour choisir un jeu de choix de valeurs de spécifications opérationnelles initiales. Puis, il sélectionne le bouton 120 d'activation du moteur de calcul 40.

Le moteur de calcul 40 récupère les valeurs des choix de spécifications opérationnelles effectuées à l'aide des boutons de définition 182 et tente de déterminer une trajectoire respectant les choix de spécifications opérationnelles.

Si comme sur la figure 11, aucune trajectoire ne peut être trouvée avec ce jeu de valeurs, l'indicateur de restitution 120 du ou de chaque bouton de définition 182 pour lequel une spécification opérationnelle n'est pas respectée s'affiche dans sa deuxième configuration (boutons 182 avec traits pointillés sur la figure 11).

Le moteur de calcul 40 détermine alors s'il existe pour chaque spécification opérationnelle, une valeur modifiée de la spécification opérationnelle permettant de réaliser la mission en modifiant juste cette spécification opérationnelle.

Pour chaque jauge 180, un bouton « fantôme » 300 est alors affiché avec la valeur modifiée, dans la première configuration (ici représentée par un trait gras).

L'utilisateur peut alors sélectionner à nouveau le bouton 182 pour déterminer une trajectoire alternative. Un bouton intermédiaire 302 est affiché avec la valeur sélectionnée par l'utilisateur, dans la troisième configuration (ici représentée par un trait fin continu).

Le moteur de calcul 40 peut alors être activé par l'utilisateur par l'intermédiaire du bouton 120 pour déterminer une trajectoire alternative.

La trajectoire alternative est affichée dans le cadre de restitution 134, comme illustré sur la figure 11. Par ailleurs, le ou chaque choix de spécification opérationnelle modifiée est matérialisé par une position alternative 184 de bouton 182 dans chaque jauge 180.

Lorsqu'une une trajectoire existe, les indicateurs de restitution 122 autour de chaque bouton de définition 182 sont placés dans leur première configuration (illustrée par un trait continu gras). Le cadre de restitution 134 s'affiche alors avec une ligne de déroulé de mission 140 dans la première configuration.

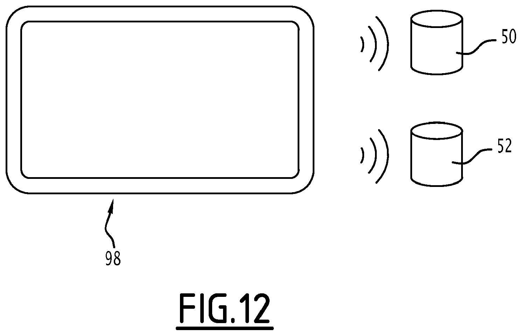

Dans la variante illustrée par la figure 12, le système de calcul de 10 est intégré au sein d'un bagage de vol électronique (« Electronic Flight Bag » ou « EFB » en anglais) se présentant par exemple sous la forme d'un dispositif électronique portable 98.

Le dispositif électronique portable est par exemple raccordé aux bases de données 50, 52 par une liaison de données sans fil suivant un protocole de transmission sans fil par exemple de type Wifi (par exemple suivant la Norme IEEE 802.11), ou Bluetooth (par exemple suivant la Norme IEEE 802.15-1-2005).

## Revendications

1. Système (10) de calcul de mission d'un aéronef, comportant :
- un moteur de calcul (40) de trajectoires de l'aéronef lors de la mission, propre à calculer une trajectoire donnée de l'aéronef au cours de la mission sur la base de spécifications opérationnelles de mission ;
- une platine de mission comportant un afficheur (44) et un ensemble de gestion d'affichage (45) ;
**caractérisé en ce que** l'ensemble de gestion d'affichage est propre à afficher simultanément sur l'afficheur (44) une pluralité de boutons de définition (114, 116, 118 ; 182) respectifs d'une pluralité de spécifications opérationnelles respectives, chaque bouton de définition (114, 116, 118 ; 182) étant propre à être actionné par un utilisateur pour définir une spécification opérationnelle respective de la mission parmi une pluralité de choix pour la spécification opérationnelle respective ;
le moteur de calcul (40) étant propre à être activé après la définition du choix de spécification opérationnelle à l'aide de chaque bouton de définition (114, 116, 118 ; 182) pour déterminer au moins une trajectoire possible de l'aéronef en fonction de chaque choix de spécification opérationnelle défini par l'utilisateur à l'aide de chaque bouton de définition (114, 116, 118 ; 182) ;
l'ensemble de gestion d'affichage (45) étant propre à afficher sur l'afficheur (44), après l'activation du moteur de calcul (40), au moins un indicateur de restitution (122, 124) donnant une information de faisabilité de la mission en respectant chaque choix de spécification opérationnelle défini par l'utilisateur à l'aide de chaque bouton de définition (114, 116, 118 ; 182),
l'indicateur de restitution (122) étant propre à présenter une première configuration d'affichage représentative d'une faisabilité de la mission en respectant chaque choix de spécification opérationnelle défini par l'utilisateur à l'aide de chaque bouton de définition (114, 116, 118 ; 182) et au moins une deuxième configuration d'affichage, représentative d'une non faisabilité de la mission en respectant chaque choix de spécification opérationnelle défini par l'utilisateur à l'aide de chaque bouton de définition (114, 116, 118; 182).

2. Système (10) selon la revendication 1, dans lequel :
(i) un bouton de définition (114) est placé mobile sur une échelle de choix de contrainte (128), permettant à un utilisateur de définir un choix de valeur de contrainte entre une valeur minimale, prise à une première extrémité (130) de l'échelle de choix de contrainte (128), et une valeur maximale, prise à une deuxième extrémité (132) de l'échelle de choix de contrainte (128), en fonction de la position du premier bouton (114) sur l'échelle de choix de contrainte (128) ; ou
(ii) un bouton de définition (116, 118) est déplaçable sur une échelle de choix de contrainte (138), permettant de définir des choix discrets de contraintes parmi un ensemble de contraintes possibles ; ou
(iii) l'ensemble de génération d'affichage (45) est propre à afficher une pluralité de jauges (180) correspondant chacune à une spécification opérationnelle de mission pour lequel un choix de spécification opérationnelle doit être fait, chaque jauge (180) étant munie d'un bouton de définition (182) sur lequel est indiqué une valeur (184) de choix de spécification opérationnelle.

3. Système (10) selon l'une quelconque des revendications précédentes, dans lequel au moins une spécification opérationnelle inclut un contexte de mission.

4. Système (10) selon la revendication 3, dans lequel le contexte de mission comporte une contrainte d'opération notamment un poids maximum au décollage, une charge en carburant de navigation, une charge en carburant de réserve, un horaire de départ ou/et un horaire d'arrivée imposés, une distance maximale à parcourir.

5. Système (10) selon la revendication 3 ou 4, dans lequel le contexte de mission comporte une contrainte de navigation, notamment une vitesse air souhaitée, un niveau de vol souhaité, et/ou un vent moyen.

6. Système (10) selon l'une quelconque des revendications précédentes, dans lequel le contexte de mission comporte une contrainte de confort passager, notamment un niveau de turbulence souhaité et/ou un niveau de couverture satellite souhaité.

7. Système (10) selon l'une quelconque des revendications précédentes, dans lequel au moins un indicateur de restitution (122) est un indicateur spécifique à une spécification de mission respective définie par l'utilisateur à l'aide d'un bouton de définition (114, 116, 118 ; 182) donné, l'indicateur spécifique donnant une information de faisabilité de la mission en respectant le choix de la spécification de mission respective défini par l'utilisateur à l'aide du bouton de définition (114, 116, 118 ; 182) donné.

8. Système (10) selon la revendication 7, dans lequel l'ensemble de gestion d'affichage (45) est propre à afficher l'indicateur spécifique sur le bouton de définition (114, 116, 118 ; 182) donné.

9. Système (10) selon l'une quelconque des revendications précédentes, dans lequel au moins un indicateur de restitution (124) est un indicateur global de faisabilité de la mission tenant compte de chaque choix de spécification de mission défini par l'utilisateur à l'aide d'un bouton de définition (114, 116, 118 ; 182), l'indicateur de restitution (124) donnant une information globale de faisabilité de la mission.

10. Système (10) selon la revendication 9, dans lequel l'ensemble de gestion d'affichage (45) est propre à afficher au moins une ligne (140) de déroulé de la mission, l'information globale de faisabilité s'affichant sur la ligne de déroulé (140).

11. Système (10) selon la revendication 10, dans lequel l'information globale identifie, sur la ligne de déroulé (140), le ou chaque segment (142) de la mission dans lequel chaque choix de spécification opérationnelle de mission est impossible à respecter.

12. Système (10) selon l'une quelconque des revendications précédentes, dans lequel l'ensemble de gestion d'affichage (45) est propre à afficher sur l'afficheur (44) au moins un bouton d'activation (120) du moteur de calcul (40) par un utilisateur, le bouton d'activation (120) étant configuré pour activer le moteur de calcul (40) afin de déterminer une trajectoire alternative de mission ne respectant pas au moins une spécification opérationnelle de la mission définie à l'aide du bouton de définition (114, 116, 118 ; 182).

13. Système (10) selon la revendication 12, dans lequel l'ensemble de gestion d'affichage (45) est propre à afficher au moins un bouton de définition (114, 116, 118 ; 182) dans une position correspondant à un choix alternatif de spécification opérationnelle obtenu par le module de calcul (40) pour la trajectoire alternative.

14. Système (10) selon l'une quelconque des revendications précédentes, dans lequel l'ensemble de gestion d'affichage (45) est propre à afficher un bouton (121) de mise en application de la trajectoire et avantageusement, une interface (150) de transmission d'informations sur la trajectoire à une installation de contrôle aérien.

15. Procédé de calcul de mission d'un aéronef, comportant :
- la fourniture d'un système de calcul (10) selon l'une quelconque des revendications précédentes, le système de calcul (10) effectuant les étapes suivantes :
- affichage sur l'afficheur (44) d'une pluralité de boutons de définition (114, 116, 118 ; 182) respectifs d'une pluralité de spécifications opérationnelles respectives, chaque bouton de définition (114, 116, 118 ; 182) étant propre à être actionné par un utilisateur pour définir une spécification opérationnelle respective de la mission parmi une pluralité de choix pour la spécification opérationnelle respective;
- après la définition du choix de spécification opérationnelle à l'aide de chaque bouton de définition (114, 116, 118 ; 182) par un utilisateur, activation du moteur de calcul (40) pour déterminer au moins une trajectoire possible de l'aéronef en fonction de chaque choix de spécification opérationnelle défini par l'utilisateur; puis
- affichage sur l'afficheur (44) par l'ensemble de gestion d'affichage (45) d'au moins un indicateur de restitution (122, 124) donnant une information de faisabilité de la mission en respectant chaque choix de spécification opérationnelle défini par l'utilisateur à l'aide de chaque bouton de définition (114, 116, 118 ; 182),
l'indicateur de restitution (122) présentant une première configuration d'affichage représentative d'une faisabilité de la mission en respectant chaque choix de spécification opérationnelle défini par l'utilisateur à l'aide de chaque bouton de définition (114, 116, 118; 182) ou au moins une deuxième configuration d'affichage, représentative d'une non faisabilité de la mission en respectant chaque choix de spécification opérationnelle défini par l'utilisateur à l'aide de chaque bouton de définition (114, 116, 118 ; 182).

## Patentansprüche

1. System (10) zur Berechnung der Mission eines Luftfahrzeugs, aufweisend:
- eine Maschine (40) zur Berechnung von Flugbahnen des Luftfahrzeugs während der Mission, die geeignet ist, eine bestimmte Flugbahn des Luftfahrzeugs während der Mission auf der Grundlage von operativen Missionsspezifikationen zu berechnen;
- eine Missionsplatine mit einer Anzeigeeinrichtung (44) und einer Anzeigeverwaltungsanordnung (45);
**dadurch gekennzeichnet, dass** die Anzeigeverwaltungsanordnung geeignet ist, gleichzeitig auf der Anzeigeeinrichtung (44) eine Vielzahl jeweiliger Definitionsknöpfe (114, 116, 118; 182) für eine Vielzahl jeweiliger operativer Spezifikationen anzuzeigen, wobei jeder Definitionsknopf (114, 116, 118; 182) geeignet ist, von einem Benutzer betätigt zu werden, um eine jeweilige operative Spezifikation der Mission aus einer Vielzahl von Auswahlmöglichkeiten für die jeweilige operative Spezifikation festzulegen;
wobei die Berechnungsmaschine (40) geeignet ist, nach der Festlegung der operativen Spezifikationsauswahl mithilfe jedes Definitionsknopfs (114, 116, 118; 182) aktiviert zu werden, um mindestens eine mögliche Flugbahn des Luftfahrzeugs in Abhängigkeit von jeder vom Benutzer mithilfe jedes Definitionsknopfs (114, 116, 118; 182) festgelegten operativen Spezifikationsauswahl zu bestimmen;
wobei die Anzeigeverwaltungsanordnung (45) geeignet ist, auf der Anzeigeeinrichtung (44) nach der Aktivierung der Berechnungsmaschine (40) mindestens einen Restitutionsindikator (122, 124) anzuzeigen, der eine Information über die Durchführbarkeit der Mission unter Einhaltung jeder vom Benutzer mithilfe jedes Definitionsknopfs (114, 116, 118; 182) festgelegten operativen Spezifikationsauswahl gibt,
wobei der Restitutionsindikator (122) geeignet ist, eine erste Anzeigekonfiguration aufzuweisen, die für eine Durchführbarkeit der Mission unter Einhaltung jeder vom Benutzer mithilfe jedes Definitionsknopfs (114, 116, 118; 182) festgelegten operativen Spezifikationsauswahl repräsentativ ist, und mindestens eine zweite Anzeigekonfiguration, die für eine Nicht-Durchführbarkeit der Mission unter Einhaltung jeder vom Benutzer mithilfe jedes Definitionsknopfs (114, 116, 118; 182) definierten operativen Spezifikationsauswahl repräsentativ ist.

2. System (10) nach Anspruch 1, wobei:
(i) ein Definitionsknopf (114) beweglich auf einer Belastungsauswahlskala (128) angeordnet ist, wodurch es einem Benutzer möglich ist, eine Auswahl eines Belastungswerts zwischen einem Minimalwert, der an einem ersten Ende (130) der Belastungsauswahlskala (128) liegt, und einem Maximalwert, der an einem zweiten Ende (132) der Belastungsauswahlskala (128) liegt, in Abhängigkeit von der Position des ersten Knopfs (114) auf der Belastungsauswahlskala (128) festzulegen; oder
(ii) ein Definitionsknopf (116, 118) auf einer Belastungsauswahlskala (138) beweglich ist, wodurch diskrete Belastungsauswahlmöglichkeiten aus einer Gruppe möglicher Belastungen festgelegt werden können; oder
(iii) die Anzeigeerzeugungsanordnung (45) geeignet ist, eine Vielzahl von Messeinrichtungen (180) anzuzeigen, die jeweils einer operativen Missionsspezifikation entsprechen, für die eine operative Spezifikationsauswahl getroffen werden muss, wobei jede Messeinrichtung (180) mit einem Definitionsknopf (182) versehen ist, auf dem ein Einsatzspezifikations-Auswahlwert (184) angegeben ist.

3. System (10) nach einem der vorhergehenden Ansprüche, wobei mindestens eine operative Spezifikation einen Missionskontext enthält.

4. System (10) nach Anspruch 3, wobei der Missionskontext eine Betriebsbeschränkung enthält, insbesondere ein maximales Startgewicht, eine Ladung an Navigationstreibstoff, eine Ladung an Reservetreibstoff, eine vorgeschriebene Abflugzeit oder/und Ankunftszeit, eine maximal zurückzulegende Entfernung.

5. System (10) nach Anspruch 3 oder 4, wobei der Missionskontext eine Navigationsbeschränkung enthält, insbesondere eine gewünschte Fluggeschwindigkeit, eine gewünschte Flughöhe und/oder einen durchschnittlichen Wind.

6. System (10) nach einem der vorhergehenden Ansprüche, wobei der Missionskontext eine Beschränkung des Passagierkomforts aufweist, insbesondere ein gewünschtes Turbulenzniveau und/oder ein gewünschtes Satellitenabdeckungsniveau.

7. System (10) nach einem der vorhergehenden Ansprüche, wobei mindestens ein Restitutionsindikator (122) ein Indikator ist, der für eine jeweilige Missionsspezifikation spezifisch ist, die vom Benutzer mithilfe eines bestimmten Definitionsknopfs (114, 116, 118; 182) definiert wurde, wobei der spezifische Indikator eine Information über die Durchführbarkeit der Mission unter Einhaltung der jeweiligen Missionsspezifikationsauswahl, die vom Benutzer mithilfe des bestimmten Definitionsknopfs (114, 116, 118; 182) festgelegt wurde, liefert.

8. System (10) nach Anspruch 7, wobei die Anzeigeverwaltungsanordnung (45) geeignet ist, den spezifischen Indikator auf dem bestimmten Definitionsknopf (114, 116, 118; 182) anzuzeigen.

9. System (10) nach einem der vorhergehenden Ansprüche, wobei mindestens ein Restitutionsindikator (124) ein globaler Indikator für die Durchführbarkeit der Mission ist, der jede Missionsspezifikationsauswahl berücksichtigt, die der Benutzer mithilfe eines Definitionsknopfs (114, 116, 118; 182) festgelegt hat, wobei der Restitutionsindikator (124) eine allgemeine Information über die Durchführbarkeit der Mission liefert.

10. System (10) nach Anspruch 9, bei dem die Anzeigeverwaltungsanordnung (45) geeignet ist, mindestens eine Linie (140) über den Verlauf der Mission anzuzeigen, wobei die allgemeine Information über die Durchführbarkeit auf der Verlaufslinie (140) angezeigt wird.

11. System (10) nach Anspruch 10, wobei die allgemeine Information auf der Verlaufslinie (140) das oder jedes Segment (142) der Mission identifiziert, in dem jede operative Missionsspezifikationsauswahl nicht eingehalten werden kann.

12. System (10) nach einem der vorhergehenden Ansprüche, wobei die Anzeigeverwaltungsanordnung (45) geeignet ist, auf der Anzeigeeinrichtung (44) mindestens einen Knopf (120) zur Aktivierung der Berechnungsmaschine (40) durch einen Benutzer anzuzeigen, wobei der Aktivierungsknopf (120) dazu ausgelegt ist, die Berechnungsmaschine (40) zu aktivieren, um eine alternative Missionsflugbahn zu bestimmen, die mindestens eine operative Spezifikation der Mission nicht erfüllt, die mithilfe des Definitionsknopfs (114, 116, 118; 182) festgelegt wurde.

13. System (10) nach Anspruch 12, wobei die Anzeigeverwaltungsanordnung (45) geeignet ist, mindestens einen Definitionsknopf (114, 116, 118; 182) in einer Position anzuzeigen, die einer alternativen operativen Spezifikationsauswahl entspricht, die von dem Berechnungsmodul (40) für die alternative Flugbahn erhalten wurde.

14. System (10) nach einem der vorhergehenden Ansprüche, wobei die Anzeigeverwaltungsanordnung (45) geeignet ist, einen Knopf (121) zur Umsetzung der Flugbahn und in vorteilhafter Weise eine Schnittstelle (150) zur Übertragung von Informationen über die Flugbahn an eine Flugsicherungseinrichtung anzuzeigen.

15. Verfahren zur Berechnung der Mission eines Luftfahrzeugs, aufweisend:
- das Bereitstellen eines Berechnungssystems (10) nach einem der vorhergehenden Ansprüche, wobei das Berechnungssystem (10) die folgenden Schritte ausführt:
- Anzeigen, auf der Anzeigeeinrichtung (44), einer Vielzahl jeweiliger Definitionsknöpfe (114, 116, 118; 182) für eine Vielzahl jeweiliger operativer Spezifikationen, wobei jeder Definitionsknopf (114, 116, 118; 182) geeignet ist, von einem Benutzer betätigt zu werden, um eine jeweilige operative Spezifikation der Mission aus einer Vielzahl von Auswahlmöglichkeiten für die jeweilige operative Spezifikation festzulegen;
- nach dem Festlegen der operative Spezifikationsauswahl mithilfe jedes Definitionsknopfs (114, 116, 118; 182) durch einen Benutzer, Aktivieren der Berechnungsmaschine (40), um mindestens eine mögliche Flugbahn des Luftfahrzeugs in Abhängigkeit von jeder vom Benutzer definierten operativen Spezifikationsauswahl zu bestimmen; dann
- Anzeigen, auf der Anzeigeeinrichtung (44) durch die Anzeigeverwaltungsanordnung (45), mindestens eines Restitutionsindikators (122, 124), der eine Information über die Durchführbarkeit der Mission unter Einhaltung jeder vom Benutzer mithilfe jedes Definitionsknopfs (114, 116, 118; 182) festgelegten operativen Spezifikationsauswahl gibt,
wobei der Restitutionsindikator (122) eine erste Anzeigekonfiguration aufweist, die für eine Durchführbarkeit der Mission unter Einhaltung jeder vom Benutzer mithilfe jedes Definitionsknopfs (114, 116, 118; 182) festgelegten operativen Spezifikationsauswahl repräsentativ ist oder mindestens eine zweite Anzeigekonfiguration, die für eine Nicht-Durchführbarkeit der Mission unter Einhaltung jeder vom Benutzer mithilfe jedes Definitionsknopfs (114, 116, 118; 182) definierten operativen Spezifikationsauswahl repräsentativ ist.

## Claims

1. An aircraft mission computing system (10), comprising:
- an aircraft trajectories computing engine (40) during the mission, being able to compute a given trajectory of the aircraft during the mission based on operational mission specifications ;
- a mission deck comprising a display (44) and a display manager (45) ;
**characterized in that** the display manager is able to simultaneously display, on the display (44), a plurality of respective buttons (114, 116, 118 ; 182) for defining a plurality of respective operational specifications, each definition button (114, 116, 118 ; 182) being able to be actuated by a user to define a operational specification of the mission from among a plurality of choices for the respective operational specification ;
the computing engine (40) being able to be activated after defining a choice of operational specification using each definition button (114, 116, 118; 182) to determine at least one possible trajectory of the aircraft based on each choice of operational specification defined by the user using each definition button (114, 116, 118 ; 182);
the display manager (45) being able to display on the display (44), after the activation of the computing engine (40), at least one outcome indicator (122, 124) providing feasibility information of the mission with the mission respecting each choice of operational specification defined by the user using each definition button (114, 116, 118 ; 182),
the outcome indicator (122) being able to present a first display configuration representative of a feasibility of the mission with the mission respecting each operational specification defined by the user using each definition button (114, 116, 118 ; 182) and at least one second display configuration, representative of a non-feasibility of the mission with the mission respecting each operational specification defined by the user using each definition button (114, 116, 118 ; 182).

2. The system (10) according to claim 1, wherein :
(i) a definition button (114) is placed movably on a constraint selection scale (128), allowing the user to define a choice of constraint value between a minimum value, taken at a first end (130) of the constraint selection scale (128), and a maximum value, taken at a second end (132) of the constraint selection scale (128), based on the position of the first button (114) on the constraint selection scale (128) ; or
(ii) a definition button (116, 118) is movable on a constraint selection scale (138), making it possible to define discrete constraint choices from among a set of possible constraints ; or
(iii) the display generating assembly (45) is able to display a plurality of gauges (180) each corresponding to an operational mission specification for which a choice of operational specification must be made, each gauge (180) is provided with a definition button (182) on which an operational specification selection value (184) is indicated.

3. The system (10) according to claim any one of the preceding claims, wherein at least one operational specification includes a mission context.

4. The system (10) according to claim 3, wherein the mission context includes an operating constraint in particular a maximum takeoff weight, a navigation fuel load, a reserve fuel load, an imposed takeoff time and/or arrival time, a maximum distance to be traveled.

5. The system (10) according to claim 3 or 4, wherein the mission context includes a navigation constraint, in particular a desired airspeed, a desired flight level, and/or an average wind.

6. The system (10) according to any one of the preceding claim, wherein the mission context includes a passenger comfort constraint, in particular a desired turbulence level and/or a desired satellite coverage level.

7. The system (10) according to claim any one of the preceding claims, wherein at least one outcome indicator (122) is an indicator specific to a respective mission specification defined by the user using a given definition button (114, 116, 118 ; 182), the specific indicator providing feasibility information on the mission with the mission respecting the choice of the respective mission specification defined by the user using the given definition button (114, 116, 117 ; 182).

8. The system (10) according to claim 7, wherein the display manager (45) is able to display the specific indicator on the given definition button (114, 116, 118 ; 182).

9. The system (10) according to any one of the preceding claims, wherein at least one outcome indicator (124) is an overall mission feasibility indicator taking account of each mission specification choice defined by the user using a respective definition button (114, 116, 118 ; 182), the outcome indicator (124) providing overall feasibility information for the mission.

10. The system (10) according to claim 9, wherein the display manager (45) is able to display at least one mission progress bar (140), the overall feasibility information being displayed on the progress bar (140).

11. The system (10) according to claim 10, wherein the overall information identifies, on the progress bar (140), the or each segment (142) of the mission in which each operational mission specification choice is impossible to respect.

12. The system (10) according to one of the preceding claims, wherein the display manager (45) is able to display on the display (44) at least one activation button (120) for activation of the computing engine (40) by a user, the activation button (120) being configured to activate the computing engine (40) in order to determine an alternative mission trajectory not respecting at least one operational specification of the mission defined using the definition button (114, 116, 118 ; 182).

13. The system (10) according to claim 12, wherein the display manager (45) is able to display at least one definition button (114, 116, 118 ; 182) in a position corresponding to an alternative choice of operational specification obtained by the computing engine (40) for the alternative trajectory.

14. The system (10) according to any one of the preceding claims, wherein the display manager (45) is able to display a button (121) for applying the trajectory and advantageously, an interface (150) for sending information on the trajectory to an air traffic control facility.

15. An aircraft mission computing method, comprising :
- providing a computing system (10) according to any one of the preceding claims, the computing system (10) carrying out the following steps:
- displaying on the display (44) a plurality of respective definition buttons (114, 116, 118 ; 182) for a plurality of respective operational specifications, each definition button (114, 116, 118 ; 182) being able to be actuated by a user to define a operational specification of the mission from among a plurality of choices for the respective operational specification ;
- after defining a choice of operational specification using each definition button (114, 116, 118 ; 182) by a user, activating the computing engine (40) to determine at least one possible trajectory of the aircraft based on each choice of operational specification defined by the user; then
- displaying on the display (44), by the display manager (45), at least one outcome indicator (122, 124) providing feasibility information of the mission with the mission respecting each choice of operational specification defined by the user using each definition button (114, 116, 118 ; 182).
the outcome indicator (122) presenting a first display configuration representative of a feasibility of the mission with the mission respecting each operational specification defined by the user using each definition button (114, 116, 118; 182) or at least one second display configuration, representative of a non-feasibility of the mission with the mission respecting each operational specification defined by the user using each definition button (114, 116, 118 ; 182).
